# EUROPEAN PATENT APPLICATION

(11) **EP 2 138 850 A1**
(43) Date of publication of application: **30.12.2009**
(21) Application number: 08722121.4
(22) Date of filing: 14.03.2008
(51) Int. Cl.: G01N 35/10, G01N 1/00, G01N 33/543

(54) **LIQUID FEEDING APPARATUS AND LIQUID FEEDING CONTROL METHOD**

(30) Priority: 20.03.2007 JP 2007072600
(71) Applicant: Fujifilm Corporation, Tokyo 106-8620 (JP)
(72) Inventor: SHIRAISHI, Junpei, Ashigarakami-gun Kanagawa 258-8538 (JP)
(74) Representative: Höhfeld, Jochen
(86) International application number: PCT/JP2008/054725
(87) International publication number: WO 2008/123022

(57) **Abstract**

A pipette chip has an opening section to be inserted into a supply port of a liquid channel, which connects the supply port and a discharge port of a liquid, and reserves the liquid to be supplied to the liquid channel. In a liquid feeding apparatus, the pipette chip is controlled to insert the opening section into the supply port. Suction and discharge of the liquid and a gas in the pipette chip are controlled to form an air layer at the opening section by sucking the air from the opening section before inserting the opening section into the supply port.

## Description

### Technical Field

The present invention relates to a liquid feeding (sending) apparatus and a liquid feeding (sending) control method that are mainly used in a measuring apparatus that measures the interaction between a specimen substance that is the object of measurement and a physiological active substance.

### Background Art

Selecting a specimen substance, that has a functional group that bonds with a reactive group that a physiological active substance has, from among many types of candidates is conventionally known. Specific proteins and the like are given as examples of the physiological active substance. The use of a specimen substance, such as a nucleic acid or a derivative thereof or the like that bonds with such a specific physiological active substance, is expected mainly in medical fields and the like.

Various methods that evaluate the interaction between a physiological active substance and a specimen substance are used as methods of selecting a specimen substance that bonds with a physiological active substance. As an evaluating method, there is known a method that utilizes near field light because of the fact that a marker is unnecessary and the height of the sensitivity. As an example of the aforementioned interaction measurement using near field light, there is a method utilizing surface plasmon resonance.

Generally, in measuring the interaction between a physiological active substance and a specimen substance using surface plasmon resonance, a specimen solution, in which the specimen substance that is the object of measurement is dissolved in an organic solvent, is supplied to a measurement region that is disposed on one surface of a prism and is formed from a immobilized film at which the physiological active substance is immobilized, laser light is illuminated onto the immobilized film at various angles so that total reflection conditions at the interface between the immobilized film and the physiological active substance are obtained, and, on the basis of the results of detection that detect the refractive index of the light totally reflected at the interface, the interaction between the physiological active substance and the specimen substance is measured.

Further, in order to obtain even more accurate information, there are cases of using a method in which a measurement region at which the physiological active substance is immobilized and a reference region at which the physiological active substance is not immobilized are provided, and by correcting the signal information that is obtained from the measurement region using signal information obtained from the reference region, the interaction between the specimen substance and the physiological active substance is shown.

In recent years, there have been proposed apparatuses that structure numerous tubes at the surface of a immobilized film formed on the prism, and provide the aforementioned measurement region and reference region within each of the tubes, and can measure the interaction between numerous substances at one time.

However, when injecting liquid into the tubes, there are cases in which minute air becomes mixed-in, and air bubbles adhere to the tube inner walls. In the aforementioned measurement that utilizes surface plasmon resonance, air bubbles that adhere to the tube inner walls will be a cause of measurement errors.

Conventionally, in order to remove air that is mixed-in within a tube, there has been proposed providing a mechanism that removes the gas that is mixed-in in a filled liquid by applying pressure to / reducing the pressure of the filled liquid (see, for example, Japanese Patent Application Laid-Open (JP-A) No. 7-110334).

Further, in order to reduce the generation of bubbles, there has been proposed replacing the gas of a liquid-contacting space that contacts the surface of a liquid, with helium gas or the like (see, for example, JP-A No. 2004-361267).

### Disclosure of the Invention

### Problems to be Solved by the Invention

The present invention is made in view of the above-described circumstances, and provides a liquid feeding apparatus and liquid feeding control method that can remove air adhering to the inner walls of a liquid channel.

### Means for Solving the Problems

A first aspect of the present invention is a liquid feeding apparatus that feeds liquid to a liquid channel connecting a supply port through which liquid is supplied and a discharge port through which liquid is discharged, including: supply tube having an opening that is inserted in the supply port, and at which a first liquid that is supplied to the liquid channel is reserved; a pump that carries out suctioning and discharging of liquid and gas of the supply tube; a moving section that moves the supply tube; and a control section that controls the moving section such that the opening is inserted in the supply port, and, before the opening is inserted in the supply port, controls the pump so as to suction air into the opening of the supply tube and form an air layer at the opening.

In accordance with the first aspect, by inserting the opening in the supply port after forming the air layer at the opening of the supply tube, the air layer is fed into the liquid channel before the liquid is fed. Therefore, air adhering to the inner walls of the liquid channel can be removed.

In the first aspect, the control section may control the liquid feeding apparatus so as to feed a surfactant to the liquid channel to make inner walls of the liquid channel hydrophilic. In this way, it becomes difficult for bubbles to adhere to the inner walls of the liquid channel.

A second aspect of the present invention is a liquid feeding control method including: controlling a supply tube, that has an opening that is inserted in a supply port of a liquid channel connecting the supply port through which liquid is supplied and a discharge port through which liquid is discharged, and at which a first liquid that is supplied to the liquid channel is reserved, such that the opening is inserted in the supply port; and before the opening is inserted in the supply port, controlling such that suctioning and discharging of liquid and gas of the supply tube are carried out so as to suction air from the opening of the supply tube and form an air layer at the opening.

In accordance with the second aspect, by inserting the opening in the supply port after forming the air layer at the opening of the supply tube, the air layer is fed into the liquid channel before the liquid is fed. Therefore, air adhering to the inner walls of the liquid channel can be removed.

### Effects of the Invention

In accordance with the liquid feeding method and the liquid feeding apparatus of the present invention, the opening is inserted in the supply port after the air layer is formed at the opening of the supply tube. Therefore, air adhering to the inner walls of the liquid channel can be removed.

### Brief Description of the Drawings

Fig. 1 is a perspective view of the interior of a biosensor of an embodiment relating to the present invention.
Fig. 2 is a top view of the interior of the biosensor of the present embodiment.
Fig. 3 is a side view of the interior of the biosensor of the present embodiment.
Fig. 4 is a perspective view of a measuring stick of the present embodiment.
Fig. 5 is an exploded perspective view of the measuring stick of the present embodiment.
Fig. 6 is a schematic drawing showing a state in which illuminated lights are incident on a measurement region and a reference region of the measuring stick of the present embodiment.
Fig. 7 is a drawing viewing, from below, one channel member of the measuring stick of the present embodiment.
Fig. 8 is a perspective view showing a vertical driving mechanism of a dispensing head of the biosensor of the present embodiment.
Fig. 9 is a schematic structural drawing of a liquid suctioning and discharging section of the biosensor of the present embodiment.
Fig. 10 is a schematic drawing showing the structure in a vicinity of an optical measuring section of the biosensor of the present embodiment, and the electrical structure of the biosensor.
Fig. 11 is a cross-sectional view of a liquid channel showing an example of a state in which air, that is mixed-in within the liquid channel, becomes bubbles and adheres to the inner walls of the liquid channel.
Fig. 12 is a cross-sectional view showing the state of the interiors of the liquid channel and pipette chips when inserting the pipette chips into the liquid channel of the present embodiment.
Fig. 13 is a cross-sectional view showing the state of the interiors of the liquid channel and the pipette chips when feeding an air layer to the liquid channel of the present embodiment.
Fig. 14 is a cross-sectional view showing the state of the interiors of the liquid channel and the pipette chips when feeding the air layer to the liquid channel of the present embodiment.
Fig. 15 is a cross-sectional view showing the state of the interiors of the liquid channel and the pipette chips when liquid replacement has been carried out at the liquid channel of the present embodiment.
Fig. 16 is a flowchart showing the flow of liquid replacement processing of the present embodiment.

### Preferred Embodiments for Implementing the Invention

Hereinafter, an embodiment of the present invention will be described with reference to the drawings.

A biosensor 10 serving as a liquid feeding apparatus relating to the present invention is a so-called surface plasmon sensor that utilizes surface plasmon resonance arising at the surface of a metal film, and measures the interaction between a protein Ta and a sample A. The protein Ta is immobilized on a measuring stick relating to the present invention, and by supplying the sample A to the protein Ta and detecting the signal change, the interaction is measured.

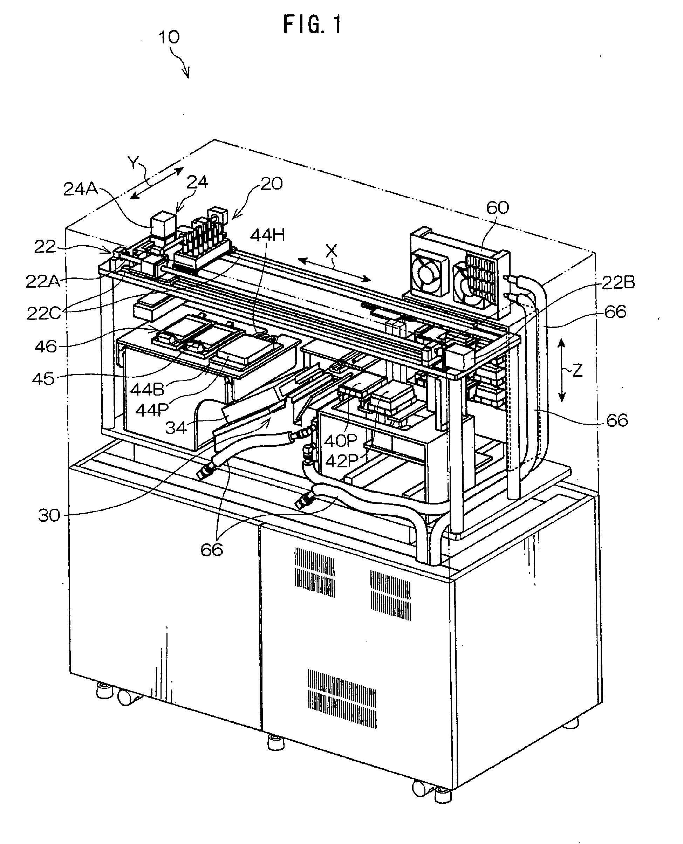

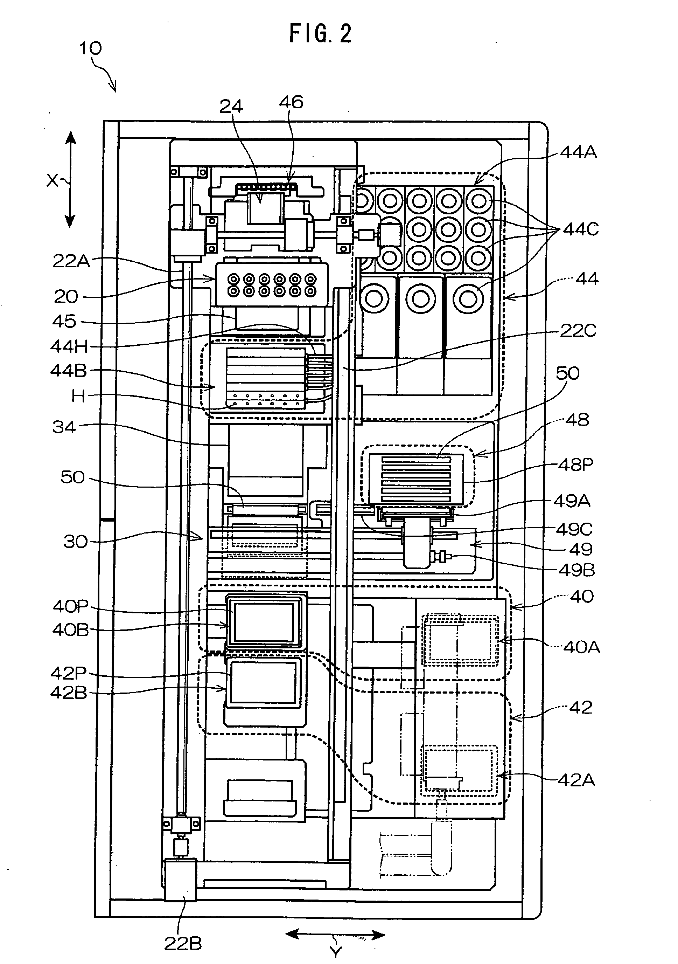

As shown in Fig. 1 through Fig. 3, the biosensor 10 has a dispensing head 20, a measuring section 30, a sample stocking section 40, a pipette chip stocking section 42, a buffer stocking section 44, a refrigerating section 46, a measuring stick stocking section 48, and a radiator 60.

At the radiator 60, thin plates made of metal are stacked and channels are formed at the interior, and the radiator 60 causes temperature adjusting water to flow to the channels and carries out heat exchange between the temperature adjusting water and the air within a housing. A radiator air blowing fan 62 is provided at the radiator 60. The air that is heat-exchanged at the radiator 60 is fed-in to the housing interior by the radiator air blowing fan 62. Circulating hoses 66 are connected to the radiator 60. Due thereto, the temperature of the housing interior is adjusted.

The sample stocking section 40 is structured by a sample stacking section 40A and a sample setting section 40B. Sample plates 40P, that stock respectively different analyte solutions in individual cells, are accommodated at the sample stacking section 40A and stacked in a Z direction. One of the sample plates 40P is conveyed from the sample stacking section 40A by an unillustrated conveying mechanism, and is set at the sample setting section 40B.

The pipette chip stocking section 42 is structured by a pipette chip stacking section 42A and a pipette chip setting section 42B. Pipette chip stockers 42P that hold plural pipette chips are accommodated in the pipette chip stacking section 42A and stacked in the Z direction (vertical direction). One of the pipette chip stockers 42P is conveyed from the pipette chip stacking section 42A by an unillustrated conveying mechanism, and is set at the pipette chip setting section 42B.

The buffer stocking section 44 is structured by a bottle accommodating section 44A and a buffer supplying section 44B. Plural bottles 44C in which buffer liquids are reserved are accommodated in the bottle accommodating section 44A. A buffer plate 44P is set at the buffer supplying section 44B. The buffer plate 44P is sectioned into plural lines, and buffer liquids of different concentrations are reserved in the respective sections. Further, holes H, into which pipette chips CP are inserted at the time of access of the dispensing head 20, are structured in the upper portion of the buffer plate 44P. Buffer liquids are supplied to the buffer plate 44P from the bottles 44C via hoses 44H.

A correction plate 45 is disposed adjacent to the buffer supplying section 44B, and the refrigerating section 46 is disposed adjacent thereto. The correction plate 45 is a plate for carrying out concentration adjustment of the buffer liquids, and plural cells are structured in the form of a matrix. Samples requiring refrigeration are disposed in the refrigerating section 46. The refrigerating section is made to be low temperature and, therefore, the samples are maintained in a low-temperature state.

A measuring stick accommodating plate 48P is set at the measuring stick stocking section 48. Plural measuring sticks 50 serving as measurement chips are stored at the measuring stick accommodating plate 48P.

A measuring stick conveying mechanism 49 is provided between the measuring stick stocking section 48 and the measuring section 30. The measuring stick conveying mechanism 49 is structured to include a holding arm 49A that nips and holds the measuring stick 50 from both sides, a ball screw 49B that, by rotating, moves the holding arm 49A in a Y direction, and a conveying rail 49C disposed in the Y direction and on which the measuring stick 50 is placed. At the time of measurement, one of the measuring sticks 50 is placed on the conveying rail 49C from the measuring stick accommodating plate 48P by the measuring stick conveying mechanism 49, and, while being nipped by the holding arm 49A, the measuring sticks 50 is moved to and set at the measurement section 30.

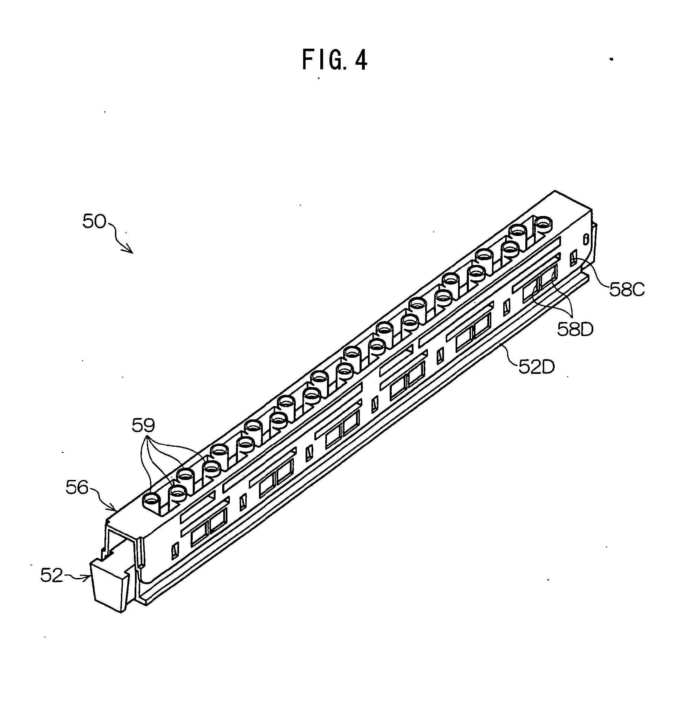

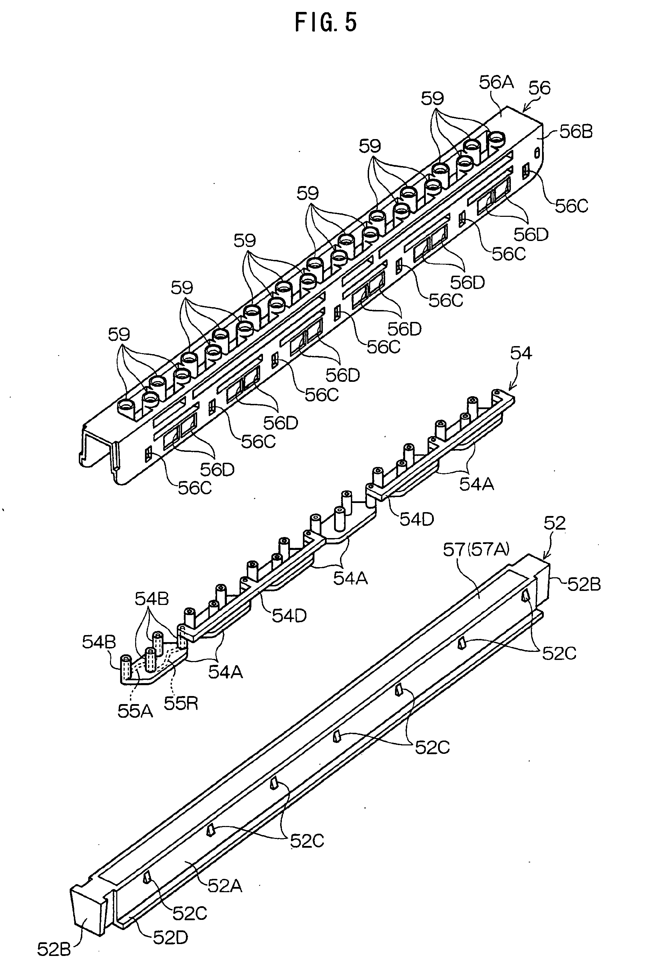

As shown in Fig. 4 and Fig. 5, the measuring stick 50 includes an dielectric block 52, a channel member 54, and a holding member 56.

The dielectric block 52 is formed of a transparent resin or the like that is transparent with respect to light beams, and is provided with a prism portion 52A formed in the shape of a rod having a trapezoidal cross-section, and held portions 52B that are formed integrally with the prism portion 52A at both ends of the prism portion 52A.

A metal film 57 is formed at the measuring surface at the wider side among the two surfaces of the prism portion 52A that are parallel to one another. A linker layer 57A for immobilizing the protein Ta on the metal film 57 is formed at the surface of the metal film 57. The protein Ta is immobilized on the linker layer 57A.

The dielectric block 52 functions as a typical prism. At the time of measuring at the biosensor 10, light beams are incident from one of the two opposing side surfaces of the prism portion 52A that are not parallel to one another, and light beams that are totally reflected at the interface with the metal film 57 are emitted from the other side.

Engaging convex portions 52C that are engaged with the holding member 56 are formed along the upper edges of both side surfaces of the prism portion 52A. Further, flange portions 52D that are engaged with the conveying rail 49C are formed along the side edges at the lower side of the prism portion 52A.

As shown in Fig. 5, the channel member 54 has six base members 54A. Four cylinder members 54B stand erect at each of the base members 54A. At each three base members 54A, the upper portions of ones of the erect cylinder members 54B of the base members 54A are connected by a connecting member 54D. The channel member 54 can be formed of a material that is soft and is elastically deformable, for example, an amorphous polyolefin elastomer. By structuring the channel member 54 by an elastically deformable material, the adhesiveness to the dielectric block 52 can be improved, and the sealability of liquid channels 55 that are formed between the channel member 54 and the dielectric block 52 can be ensured.

The holding member 56 is elongated, and is a shape in which a top surface member 56A and two side plates 56B are structured in the shape of a lid. Engaging holes 56C, that are engaged with the engaging convex portions 52C of the dielectric block 52, are formed in the side plates 56B, and windows 56D are formed at portions corresponding to the optical paths of the aforementioned light beams. The engaging holes 56C and the engaging convex portions 52C are engaged, and the holding member 56 is mounted to the dielectric block 52. The channel member 54 is molded integrally with the holding member 56, and is disposed between the holding member 56 and the dielectric block 52. Receiving portions 59 are formed in the top surface member 56A at positions corresponding to the cylinder members 54B of the channel member 54. The receiving portions 59 are substantially cylindrical.

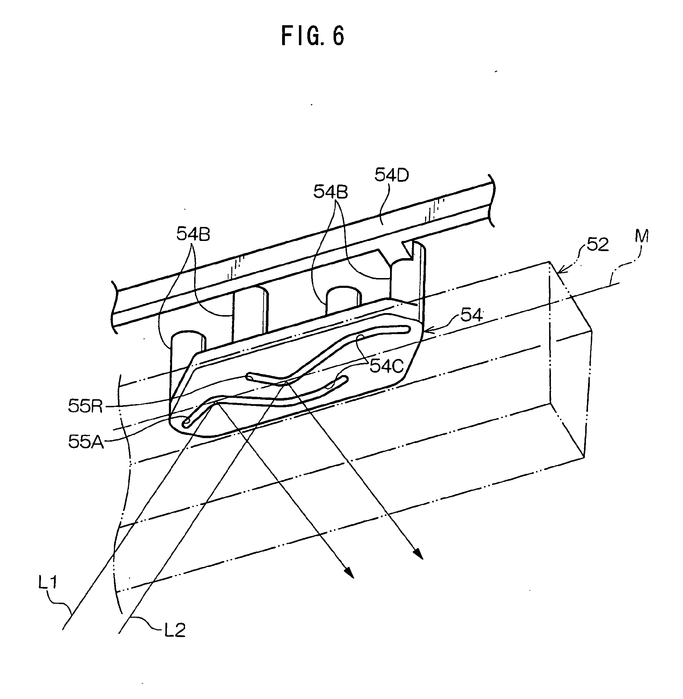

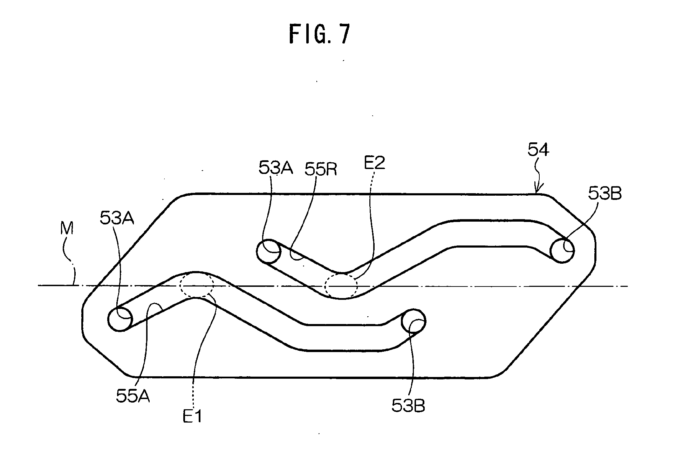

As shown in Fig. 6 and Fig. 7, two channel grooves 54C that are substantially S-shaped are formed in the bottom surface of the base member 54A. By closely contacting the base member 54A with the measurement surface (the top surface) of the dielectric block 52, the liquid channels 55 are structured by the aforementioned hollow portions and the spaces that are structured between the channel grooves 54C and the measurement surface of the dielectric block 52. Two of the liquid channels 55 are formed in one base member 54A.

Note that, due to the channel member 54 being pressed against the dielectric block 52 by an unillustrated measuring stick pressing member, the channel member 54 is made to closely contact with the dielectric block 52, and therefore, the sealability of the liquid channels 55 is ensured.

The respective end portions of the channel grooves 54C communicate one-to-one with the hollow portions of the cylindrical members 54B. Due thereto, as shown in Fig. 7, at one end of each liquid channel 55, a supply port 53A that supplies the sample to that liquid channel 55 is formed, and, at the other end, a discharge port 53B for discharging the sample from that liquid channel 55 is formed, respectively.

Here, among the two liquid channels 55 that are formed by one channel member, one is used as a measurement channel 55A, and the other one is used as a reference channel 55R. Measurement is carried out in a state in which the protein Ta is immobilized on the metal film 57 (on the linker layer 57A) of the measurement channel 55A and the protein Ta is not immobilized on the metal film 57 (on the linker layer 57A) of the reference channel 55R.

As shown in Fig. 6, light beams L1, L2 are respectively incident on the measurement channel 55A and the reference channel 55R.

As shown in Fig. 7, the light beams L1, L2 are illuminated onto S-shaped bent portions that are disposed on a center line M of the base member 54A. Hereinafter, the illumination region of the light beam L1 at the measurement channel 55A will be called measurement region E1, and the illumination region of the light beam L2 at the reference channel 55R will be called reference region E2. The reference region E2 is the region at which is carried out measurement for correcting the data obtained from the measurement region E1 at which the protein Ta is immobilized.

The receiving portions 59 are formed in the top surface member 56A at positions corresponding to the cylinder members 54B of the channel member 54. The receiving portions 59 are substantially cylindrical, and the top surface thereof is preferably taper shapes that become lower toward the center of the cylinder.

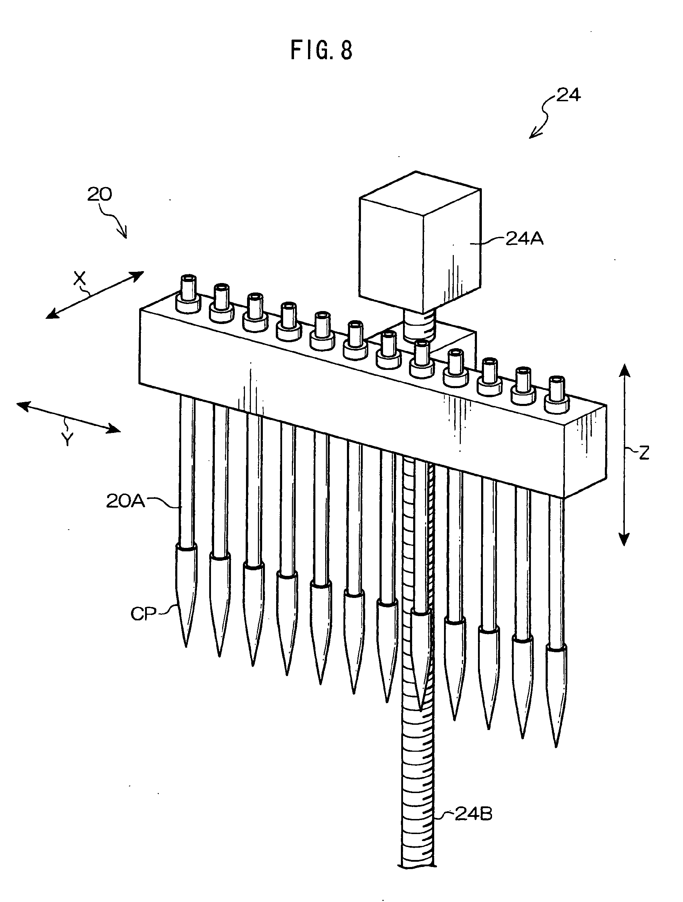

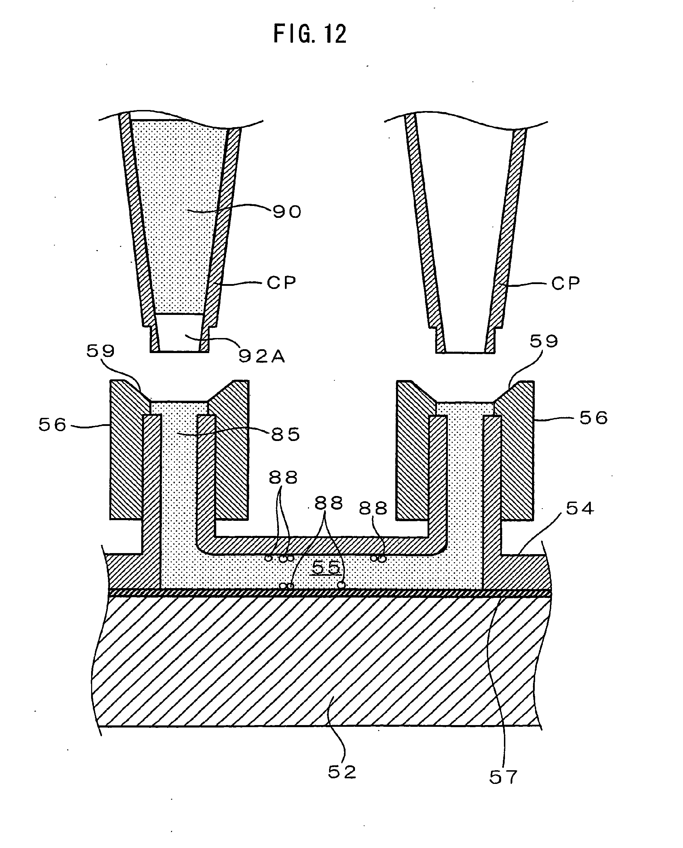

The structure of the dispensing head 20 is shown in Fig. 8. As shown in Fig. 8, 12 dispensing tubes 20A are provided at the dispensing head 20. The dispensing tubes 20A are disposed in one row along the arrow Y direction that is orthogonal to an X direction. Adjacent twos of the dispensing tubes 20A are formed as pairs, and are used such that each one thereof is made to correspond to the supply port 53A and the discharge port 53B of the liquid channel 55, respectively. Further, common dispensing tubes 20A are used for the pair of the liquid channels 55A, 55R.

Note that the distal end of each dispensing tube 20A is structured such that the pipette chip CP is detachable. The pipette chip CP that is mounted to the dispensing tube 20A can be replaced as needed.

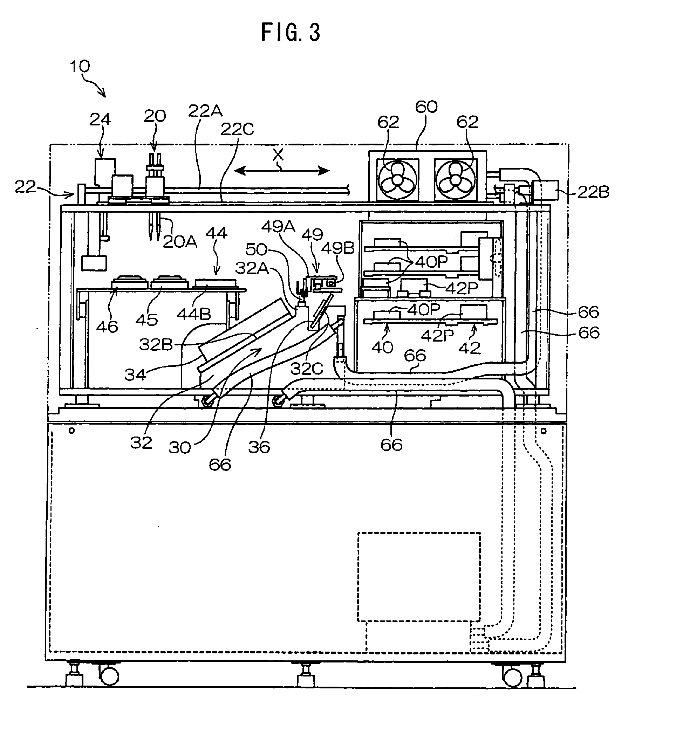

Further, as shown in Fig. 1 and Fig. 3, the dispensing head 20 can be moved along the arrow X direction by a horizontal driving mechanism 22. The horizontal driving mechanism 22 is structured by a ball screw 22A, a motor 22B and guide rails 22C. The ball screw 22A and the guide rails 22C are disposed in the X direction. Two of the guide rails 22C are disposed in parallel, and one thereof is disposed a predetermined interval away at the lower side of the ball screw 22A. The dispensing head 20 is moved in the X direction along the guide rails 22C by rotation of the ball screw 22A due to driving of the motor 22B. The dispensing head 20 is structured so as to be able, due to this X direction movement, to move to positions opposing the pipette chip setting section 42B, the sample setting section 40B, the buffer supplying section 44B, the refrigerating section 46 and the measuring section 30.

Moreover, as shown in Fig. 8, a vertical driving mechanism 24 that moves the dispensing head 20 in the arrow Z direction is provided at the dispensing head 20. As shown in Fig. 8, the vertical driving mechanism 24 includes a motor 24A and a driving shaft 24B that is disposed in the Z direction, and moves the dispensing head 20 in the Z direction. Due to this Z direction movement, the dispensing head 20 can access the pipette chip stocker 42P set at the pipette chip setting section 42B, the sample plate 40P set at the sample setting section 40B, the buffer plate 44P set at the buffer supplying section 44B, and the measuring stick 50 set at the measuring section 30.

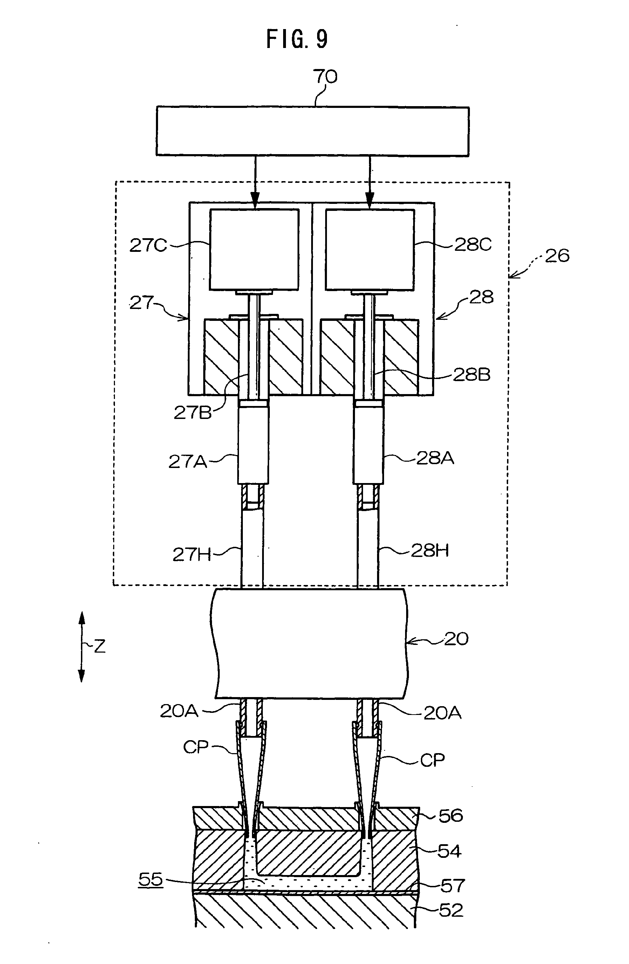

As shown in Fig. 9, a suctioning and discharging driving section 26 is connected to the dispensing head 20. The suctioning and discharging driving section 27 has first pumps 27 and second pumps 28. The first pump 27 and the second pump 28 are provided so as to correspond respectively to the aforementioned pair of dispensing tubes 20A. The first pump 27 is structured by a syringe pump, and has a first cylinder 27A, a first piston 27B, and a first motor 27C that drives the first piston 27B. The first cylinder 27A is connected to the dispensing head 20 via a pipe 27H. Further, the second pump 28 as well is structured by a syringe pump, and has a second cylinder 28A, a second piston 28B, and a second motor 28C that drives the second piston 28B. The second cylinder 28A is connected to the dispensing head 20 via a pipe 28H.

Note that the first motors 27C and the second motors 28C are electrically connected to a controller 70 that will be described later, and the driving thereof is controlled by the controller 70.

At times of supplying liquids such as a sample or a buffer liquid or the like, the dispensing head 20 is moved to above the refrigerating section 46, the sample setting section 40A and the buffer supplying section 44B, and the first motors 27C are respectively driven, and the sample or the buffer liquid is suctioned into the pipette chips CP that are mounted to ones (a total of 6) of the pairs of dispensing tubes 20A. The suction amount at this time is an amount corresponding to two of the liquid channels, because it is supplied to the pair of liquid channels 55A, 55R. Then, the pipette chips CP of the six dispensing tube 20A sides that have suctioned the sample or buffer liquid are inserted into the supply ports 53A of the measurement channel 55A sides of the measuring stick 50, and the pipette chips CP mounted to the other six dispensing tubes 20A of the respective pairs of the dispensing tubes 20A are inserted into the discharge ports 53B of the measurement channels 55A. Then, the first motors 27C and the second motors 28C are driven simultaneously, and replacing of the liquids is carried out by discharging half amounts of the liquids from the dispensing tubes 20A of the supply port 53A sides and suctioning the liquids at the dispensing tubes 20A of the discharge port 53B sides. Next, those pairs of dispensing tubes 20A are inserted into the supply ports 53A and the discharge ports 53B of the reference channel 55R sides, and the first motors 27C and the second motors 28C are driven similarly, and by supplying the remaining half amounts of the liquids of the pipette chips CP while suctioning the liquids within the reference channels 55R, replacing of the liquids is carried out.

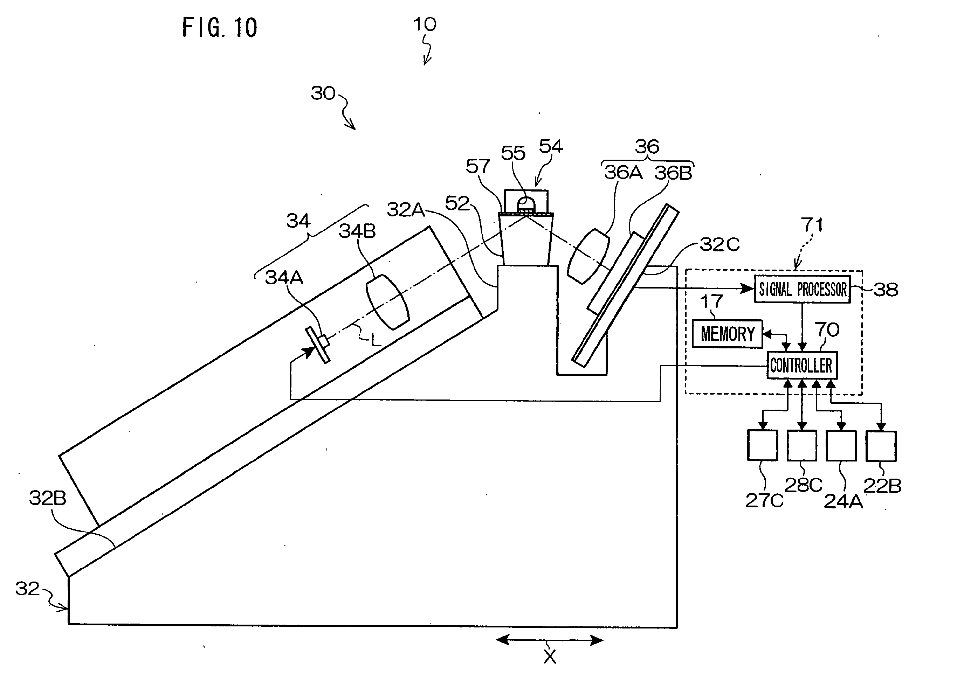

The structure of the measuring section 30 is shown in Fig. 10. As shown in Fig. 10, the measuring section 30 includes an optical platen 32, a light emitting section 34, and a light-receiving section 36. Note that, in Fig. 10, members of the measuring stick 50 other than the dielectric block 52 and the channel member 54 are omitted.

Viewed from the Y direction, a platen rail section 32A that is structured by a horizontal flat surface at the center of the upper portion, an emitting inclined section 32B that becomes lower in the direction of moving away from the platen rail section 32A, and a light-receiving inclined section 32C that is disposed at the opposite side of the emitting inclined section 32B with the platen rail section 32A therebetween, are formed at the optical platen 32. The measuring stick 50 is set along the Y direction at the platen rail section 32A.

The light emitting section 34, that emits the light beams L1, L2 toward the measuring stick 50, is set at the emitting inclined section 32B of the optical platen 32. A light source 34A, a lens unit 34B are provided at the light emitting section 34.

A light beam L in a divergent (scattered) state is emitted from the light source 34A. The light beam L that is emitted from the light source 34A becomes the two light beams L1, L2 via the lens unit 34B. The two light beams are respectively incident on positions that correspond to the pair of the measurement region E1 and the reference region E2 of the dielectric block 52 that is disposed on the optical platen 32. Note that a light source, that can emit light having angle spreading, is used as the light source 34A, and is structured so as to emit the light beam L in a scattered state.

At the measurement region E1 and the reference region E2, the light beams L1, L2 in scattered states include various incidence angle components with respect to the interface between the metal film 57 and the dielectric block 52, and are incident at angles that are greater than or equal to the total reflection angle.

At this time, the illuminated light L1 and the illuminated light L2 that are illuminated onto the metal film 57 cause weak energy waves (evanescent waves) to be generated at the metal film 57, and cause compressional waves (surface plasmons) to be generated at the surface of the metal film 57 that contacts the dielectric block 52. When the wavelengths of the evanescent waves and the surface plasmons coincide, they resonate, and, at light of a specific incidence angle that is included respectively in the illuminated lights L1 and L2 that are illuminated on the metal film 57, the reflected light attenuates (i.e., surface plasmon resonance (SPR)).

The evanescent wave varies in accordance with the interaction between the substances at the metal film 57. Further, the dielectric constant, that is expressed by the square of the refractive index of light, affects the evanescent wave. Therefore, the interaction between the physiological active substance and the specimen substance that is brought about at the surface of the metal film 57 causes a difference in the dielectric constants, and this affects the surface plasmons and can be grasped as a change in the resonance angle, i.e., a change in the refractive index.

Accordingly, when interaction between the physiological active substance at the metal film 57 surface and the specimen substance contained in the supplied specimen solution arises, the dielectric constant of the metal film 57 surface changes, and the refractive index (angle of resonance) varies, Therefore, by selectively supplying different specimens (specimen solutions) on the physiological active substance that is processed on the metal film 57, changes in the refractive index over time can be measured, and the interaction between the molecules can be analyzed.

Here, the light-receiving section 36 is set at the light-receiving inclined section 32C. A lens unit 36A, a CCD 36B are provided at the light-receiving section 36. Due thereto, the illuminated light L1 and the illuminated light L2, that are totally reflected at the interface between the dielectric block 52 and the metal film 57, are respectively received at the CCD 36B via the lens unit 36A. Because the illuminated light L1 and the illuminated light L2 that are incident on the metal film 57 have angle spreading, the lights that are incident on the light-receiving section 36 also have angle spreading. At the CCD 36B, light detection signals obtained by photoelectrically converting the received lights are outputted to a main controller 71.

The main controller 71 includes a signal processor 38, the controller 70, and a memory 17. The signal processor 38, the memory 17, and the above-described motor 22B, motor 24A, first motor 27C and second motor 28C are connected to the controller 70 such that signal transfer is possible. The controller 70 is structured by a microcomputer including a CPU, a ROM and a RAM. Control parameters and the like, that are used in various processing routines and various processings, are stored in advance in the memory 17, and data that are generated in the respective types of processings are stored in the memory 17 at any time.

On the basis of the light detection signals inputted from the CCD 36B, the signal processor 38 determines refractive index information at the measurement region E1 and the reference region E2, and outputs it to the controller 70.

Note that, at the time of measurement, the illuminated lights L are incident on the pairs of the measurement regions E1 and the reference regions E2 of the dielectric block 52, respectively. Due thereto, the light detection signals from the plural measurement regions E1 and reference regions E2 (the six measurement regions E1 and the six reference regions E2 in Fig. 4 through Fig. 7) of the dielectric block 52 are inputted to the signal processor 38, and refractive index information at the respective reference regions E2 and the respective measurement regions E1 are outputted to the controller 70.

At the signal processor 38, by analyzing the respective inputted light detection signals, a total reflection attenuation angle θsp, that serves as the generated incidence angle of the aforementioned total reflection attenuation (the incidence angle at which the intensity of the light totally reflected at the interface between the metal film 57 and the dielectric block 52 sharply drops), is determined for the illuminated light L1 and the illuminated light L2 respectively at the respective measurement regions E1 and reference regions E2.

Then, by determining, from the determined total reflection attenuation angles θsp, the wave numbers of the surface plasmons that are generated at the interface between the above-described metal film 57 and dielectric block 52, the dielectric constants of the respective measurement regions E1, the respective reference regions E2 are determined. When the dielectric constants are determined, because the dielectric constant is the square of the refractive index, refractive index information of the refractive indices at the measurement regions E1 and the reference regions E2 respectively are determined. Further, by correcting the refractive index information of the measurement regions E1 by the refractive index information of the reference regions E2, refractive index information of the specimen substance at the respective measurement regions E1 is obtained.

When this refractive index information is outputted to the controller 70, at the controller 70, the interaction (e.g., the bonded amount) between the specimen substance of the specimen solution injection and the physiological active substance is determined on the basis of the respective inputted refractive index information.

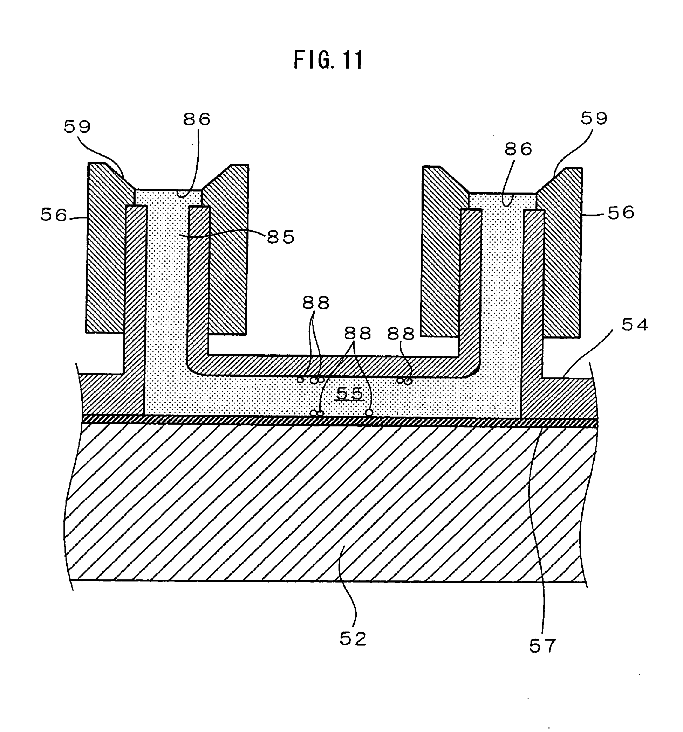

Here, a state in which liquid is filled within the liquid channel 55 of the measuring stick 50 set at the measuring section 30, and the air that is mixed-in at the time of liquid replacement becomes minute bubbles 88 and adheres to the inner walls of the liquid channel 55, is shown in Fig. 11.

Namely, when the pipette chips CP are inserted into the receiving portions 59 of the liquid channel 55, there are cases in which air is mixed-in between the pipette chips CP and liquid surfaces 86 of the liquid channel interior. If liquid feeding is started and liquid replacement within the liquid channel 55 is carried out with the air mixed-in as is, the air that is mixed-in with the liquid is, together with the liquid, pushed into the liquid channel 55. This air that is pushed-in becomes the bubbles 88, and adheres to the inner walls of the liquid channel 55 or stays within the liquid channel 55.

When the bubbles 88 adhere to the inner walls of the liquid channel 55, they affect the refractive index of the light and become a cause of errors arising in the results of measurement.

Thus, at the controller 70, as shown in Fig. 12, before the pipette chip CP at the liquid feeding side that has suctioned a liquid 90 is inserted in the receiving section 59 and liquid feeding is started, air is suctioned once and an air layer 92A is intentionally formed at the distal end of the pipette chip CP. Note that, in Fig. 12, there is shown a case of performing a processing that replaces a liquid 85, that is filled in the liquid channel 55, with the liquid 90.

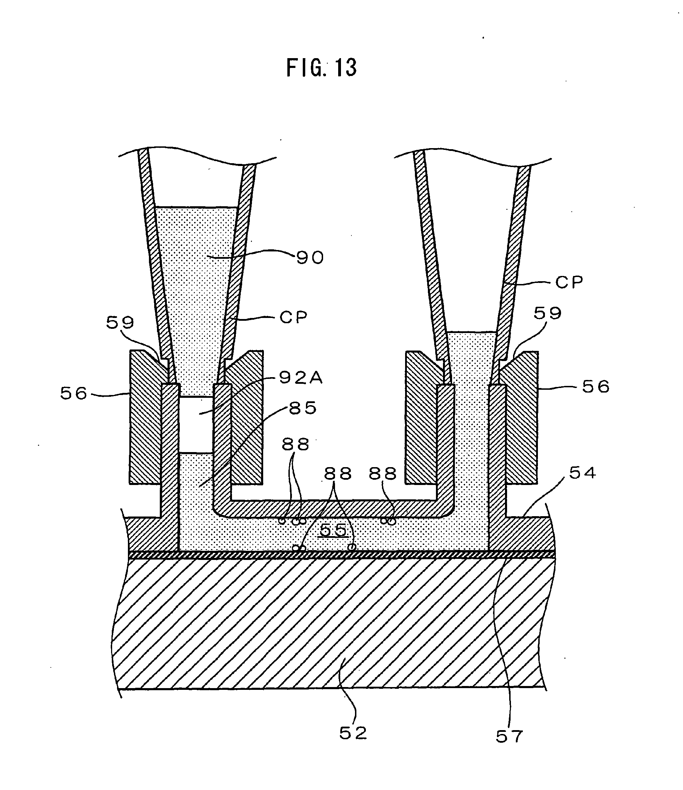

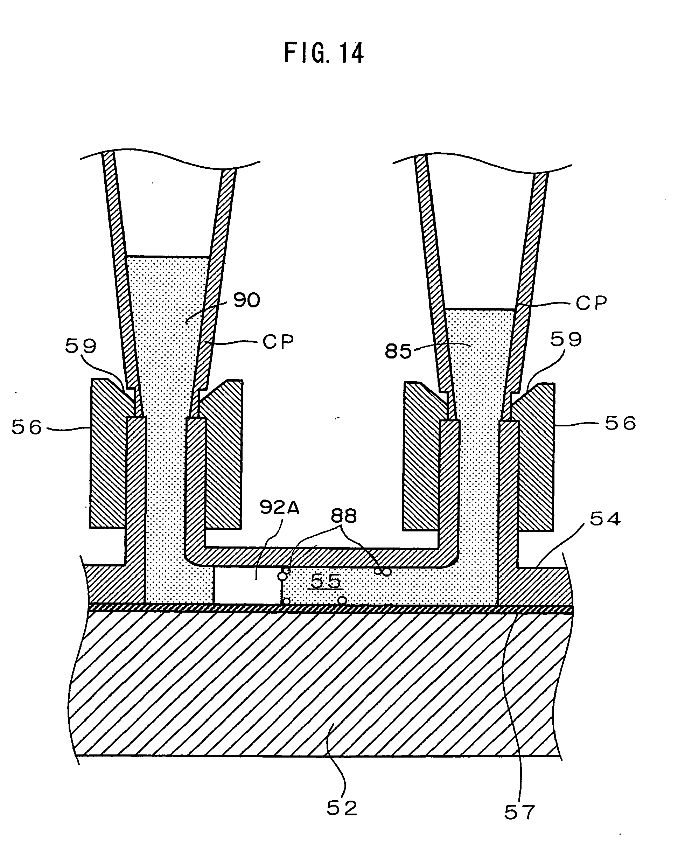

In this way, as shown in Fig. 13 and Fig. 14, before the liquid 90 is fed, the air layer 92A moves within the liquid channel 55. When the air layer 92A passes the portions where the bubbles 88 are adhering to the inner walls of the liquid channel 55, the air layer 92A mixes-together with the bubbles 88 and becomes the one air layer 92A. In this way, the bubbles 88 are recovered by the air layer 92A, and the bubbles 88 within the liquid channel 55 are removed.

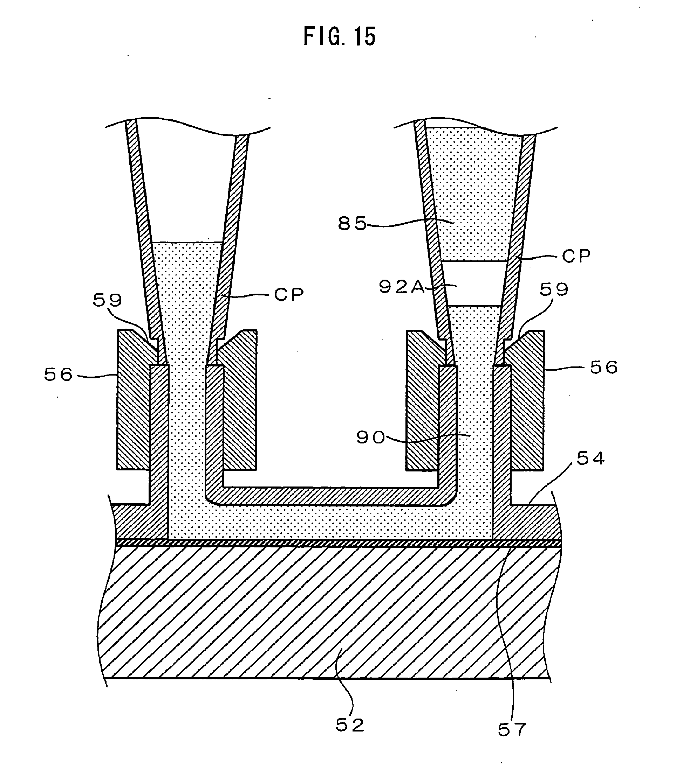

The state in which the liquid replacement is completed is shown in Fig. 15. As shown in Fig. 15, the liquid channel 55 interior is filled with the liquid 90, and the liquid 85 and the air layer 92A are suctioned within the pipette chip CP of the suction side.

Note that the amount of the air that is suctioned to the distal end of the pipette chip CP before liquid replacement is set in advance in an amount that is sufficient for the one air layer 92A to separate the liquid 85 of the suction side from the liquid 90 of the liquid feeding side within the liquid channel 55, and that, when the air layer 92A moves within the liquid channel 55, it does not separate into plural layers or masses.

Further, if the air layer breaks and moves within the liquid 90 that has been suctioned into the pipette chip CP, the air layer 92A cannot be produced between the liquid 90 and the liquid 85 within the liquid channel 55. Accordingly, it goes without saying that the amount of air that is suctioned must be an amount that becomes one mass and can stay at the distal end portion of the pipette chip CP.

Operation of the present embodiment will be described hereinafter.

At the biosensor 10, when a measuring instruction of the interaction between a specimen substance and a physiological active substance is inputted via an unillustrated operation section or the like, one of the measuring sticks 50 is set at the measuring section 30.

This setting of the measuring stick 50 at the measuring section 30 is carried out by the controller 70 controlling a driving section 49D so as to move one of the measuring sticks 50 by the measuring chip conveying mechanism 49 from the measuring chip accommodating plate 48P to the measuring section 30 and setting it thereat. By being set at the measuring section 30 in this way, the measuring stick 50 is conveyed by the measuring chip conveying mechanism 49 to the platen rail section 32A, and is disposed at a position at which the light beam L1 and the light beam L2 are incident respectively on the measurement regions E1 of the measurement channels 55A that are the objects of measurement and the reference regions E2 of the reference channels 55R.

By illuminating the light beam L1 and the light beam L2 respectively onto the plural measurement regions E1 and reference regions E2 respectively of the one dielectric block 52 from the light emitting section 34, intensity distribution information is inputted from the respective plural measurement regions E1 and plural reference regions E2 to the signal processor 38.

At this time, the controller 70 controls the dispensing head 20 to successively replace the liquids within the channels 55 of the measuring stick 50 set at the measuring section 30.

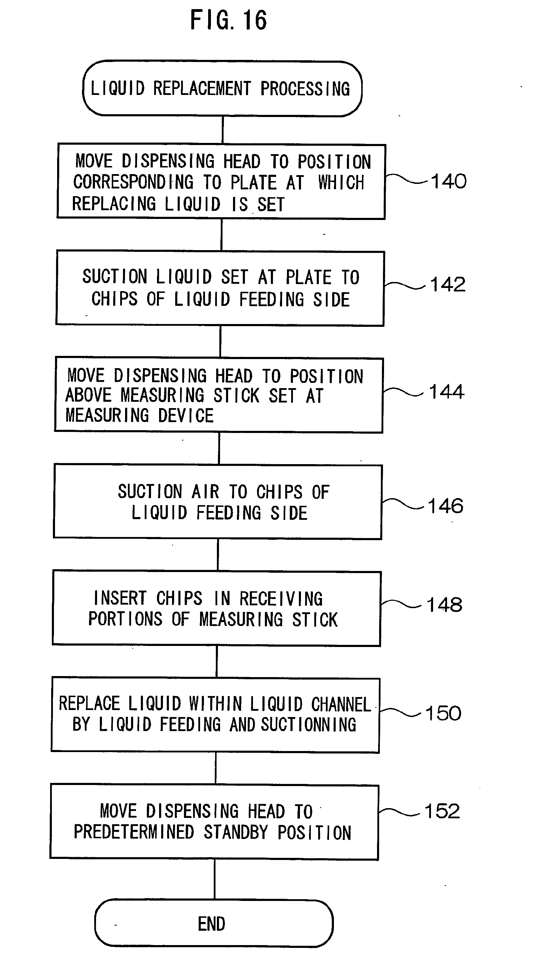

The control processes of the dispensing head 20 by the controller 70 at the time of liquid replacement are shown as a flowchart in Fig. 16.

First, in step 140, the dispensing head 20 is moved to the disposed position of the sample plate 40P or the buffer plate 44P in accordance with the type of the liquid 90 to be fed, in order to suction into the pipette chips CP the liquid that is to be newly fed into the liquid channels 55. Namely, the motor 22B is driven and the dispensing head 20 is moved in the X direction, and the motor 24 is driven and the dispensing head 20 is moved in the Z direction, and the liquid 90 that is set at the respective plates P is moved to positions where suction is possible.

In next step 142, the first motors 27C are driven, and the liquid 90 set at the sample plate 40P or the buffer plate 44P is suctioned by the pipette chips CP of the liquid feeding sides, and thereafter, the routine moves on to step 144.

In step 144, the dispensing head 20 is moved to above the measuring stick 50. Thereafter, the routine moves on to step 146, the first motors 27C are driven, predetermined amounts of air are suctioned into the pipette chips CP of the liquid feeding sides, and the air layers 92A are produced at the distal ends of the pipette chips CP.

Note that the amount of air that is suctioned to the distal end of the pipette chip CP in step 146 is set in advance to an amount that is sufficient for the one air layer 92A to be able to separate the liquid 85 of the suction side from the liquid 90 of the liquid feeding side within the liquid channel 55, and also that when the air layer 92A moves within the liquid channel 55, it does not separate into plural layers or masses.

Further, if the air layer breaks and moves within the liquid 90 that has been suctioned into the pipette chip CP, the air layer 92A cannot be produced between the liquid 90 and the liquid 85 within the liquid channel 55. Accordingly, it goes without saying that the amount of air that is suctioned must be an amount that becomes one mass and can stay at the distal end portion of the pipette chip CP.

In next step 148, openings 80 of the pipette chips CP are inserted in the receiving portions 59 of the measuring stick 50. Thereafter, the routine moves on to step 150, and liquid feeding by driving of the first motors 27C and suction by driving of the second motors 28C are performed, and replacement of the liquids 85 within the liquid channels 55 is carried out.

Due to the air layers 92A passing through the liquid channel 55 interiors, the inner walls of the liquid channels 55 are successively exposed to the air. When the bubbles 88 that adhere to the inner walls are exposed to the air of the air layers 92A, they mix-together with the air of the air layers 92A, and the bubbles 88 are absorbed by the air layers 92A.

Note that the speeds of the suction and the liquid feeding are preferably set in consideration of the liquid replacement rate, and are preferably carried out at uniform speeds from the start of liquid feeding to the completion of liquid feeding.

In next step 152, the dispensing head 20 is moved to a predetermined standby position, and thereafter, the present liquid replacement processing ends.

Note that, after ending of the liquid replacement processing, processings such as replacing of the pipette chips, disposal of the suctioned liquids, and the like are implemented suitably.

As described above in detail, in the present embodiment, the pipette chip CP, that has the opening 80 that is inserted in the receiving portion 59 serving as a supply port of the liquid channel 55 that connects the receiving portion (supply port) 59 at which liquid is supplied and the receiving portion (discharge port) 59 at which liquid is discharged, and in which the liquid 90 that is supplied to the liquid channel 55 is reserved, is controlled such that the opening 80 is inserted in the receiving portion 59 serving as the supply port. Further, before the opening 80 is inserted in the receiving portion 59 serving as the supply port, the pipette chip CP is controlled so that suction, discharging of liquid and gas of the pipette chip are carried out such that air is suctioned from the opening 80 and an air layer is formed at the opening 80. Therefore, the opening 80 is inserted in the supply port in a state in which an air layer is formed at the opening of the supply tube, and, before liquid is fed, the air layer is fed into the liquid channel. Due thereto, air adhering to the inner walls of the liquid channel can be removed.

Note that, in the above-described embodiment, the inner walls of the liquid channel 55 may be made to hydrophilic by feeding a surfactant to the liquid channel 55. In this way, the bubbles 88 can be prevented from sticking tightly to the inner walls, and the recovery rate of the bubbles 88 by the air layer 92A improves.

Further, in the above-described embodiment, a form is described that always creates the air layer 92A between the liquid 85 and the liquid 90 in the liquid replacement processing, but the present invention is not limited to this.

Namely, for example, liquid replacement may be performed by not producing the air layer 92A in the usual liquid replacement processing, and producing the air layer 92A each time that the liquid replacement processing is executed a predetermined number of times.

Further, the air layer 92A may not be produced when carrying out specific processings.

For example, when fixing the protein Ta on the metal film 57, it is preferable to not produce the air layer 92A. This is because, if a protein is exposed too much to air, the protein loses its activity.

Moreover, when stirring the liquid within the channel 55, it is preferable to carry out stirring while alternately repeating suction and liquid feeding, so that air does not enter into the liquid channel 55. If air remains mixed-in in the liquid channel 55 at the time of stirring, there becomes a state in which the mixed-in air becomes numerous minute bubbles and exists to as to be scattered in the liquid, and therefore, numerous bubbles adhere to the inner walls of the liquid channel 55 after stirring ends.

Note that the structure of the biosensor 10 and the flow of the processings and the like relating to the present embodiment are examples, and it goes without saying that appropriate changes can be made thereto within a scope that does not deviate from the gist of the present invention.

## Claims

1. A liquid feeding apparatus that feeds liquid to a liquid channel connecting a supply port through which liquid is supplied and a discharge port through which liquid is discharged, comprising:
a supply tube having an opening that is inserted in the supply port, and at which a first liquid that is supplied to the liquid channel is reserved;
a pump that carries out suctioning and discharging of liquid and gas of the supply tube;
a moving section that moves the supply tube; and
a control section that controls the moving section such that the opening is inserted in the supply port, and, before the opening is inserted in the supply port, controls the pump so as to suction air into the opening of the supply tube and form an air layer at the opening.

2. The liquid feeding apparatus of claim 1, wherein the control section controls the liquid feeding apparatus so as to feed a surfactant to the liquid channel to make inner walls of the liquid channel hydrophilic.

3. The liquid feeding apparatus of claim 1, wherein the air layer is formed from air in an amount that, when the first liquid is fed from the supply tube into the liquid channel in which a second liquid is filled, can separate the first and second liquids within the liquid channel.

4. A liquid feeding control method comprising:
controlling a supply tube, that has an opening that is inserted in a supply port of a liquid channel connecting the supply port through which liquid is supplied and a discharge port through which liquid is discharged, and at which a first liquid that is supplied to the liquid channel is reserved, such that the opening is inserted in the supply port; and
before the opening is inserted in the supply port, controlling such that suctioning and discharging of liquid and gas of the supply tube are carried out so as to suction air from the opening of the supply tube and form an air layer at the opening.

5. The liquid feeding control method of claim 4, further comprising feeding a surfactant to the liquid channel to make inner walls of the liquid channel hydrophilic.

6. The liquid feeding control method of claim 4, wherein the air layer is formed from air in an amount that, when the first liquid is fed from the supply tube into the liquid channel in which a second liquid is filled, can separate the first and second liquids within the liquid channel.
